# EUROPEAN PATENT SPECIFICATION

(11) **EP 2 973 182 B1**
(45) Date of publication and mention of the grant of the patent: **04.11.2020**
(21) Application number: 14763895.1
(22) Date of filing: 15.03.2014
(51) Int. Cl.: G06F 21/56, G06F 21/83, H04L 9/08, H04W 12/02, H04W 12/04, H04W 12/06, H04W 88/02

(54) **METHODS AND APPARATUS FOR SECURING USER INPUT IN A MOBILE DEVICE**
VERFAHREN UND VORRICHTUNG ZUR SICHERUNG EINER BENUTZEREINGABE IN EINER MOBILEN VORRICHTUNG
PROCÉDÉS ET APPAREIL POUR SÉCURISER UNE ENTRÉE D'UTILISATEUR DANS UN DISPOSITIF MOBILE

(30) Priority: 15.03.2013 US 201361794621 P
(43) Date of publication of application: 20.01.2016
(73) Proprietor: Strikeforce Technologies, Inc., Edison, New Jersey 08837 (US)
(72) Inventor: PEMMARAJU, Ram, Old Bridge, New Jersey 08857 (US)
(74) Representative: Gill Jennings & Every LLP
(86) International application number: PCT/US2014/029905
(87) International publication number: WO 2014/145186

(56) References cited:
- EP-A1- 1 286 242
- EP-A2- 1 473 615
- WO-A1-2010/123565
- US-A1- 2005 066 186
- US-A1- 2006 101 128
- US-A1- 2007 182 714
- US-A1- 2007 182 714
- US-A1- 2008 033 960
- US-A1- 2009 271 866
- US-A1- 2009 300 368
- US-A1- 2012 324 242
- US-A1- 2013 055 315

## Description

### REFERENCE TO RELATED APPLICATION

The present application claims the benefit of U.S. Provisional Patent Application No. 61/794,621, filed March 15, 2013.

### BACKGROUND OF THE INVENTION

### Field of the Invention

The present invention relates generally to all mobile device security and, more particularly, to a method and apparatus of securing data entered in all mobile devices, such as smart phones, tablets, etc.

### Description of the Related Art

Mobile devices, such as smart phones and tablets are starting to augment/replace the corporate desktop, especially in the light of Bring Your Own Device (BYOD). In this new role, the mobile device becomes the focus of attackers for stealing corporate usernames and passwords leading to data breaches, which leads to large dollar losses and unwanted headlines. Hence, protecting data in a mobile framework becomes critical.

The top mobile security issues can be grouped around

Device loss - Loss of a mobile device, whether accidental or due to theft is one of the top concerns. Fortunately, mobile device vendors have included capabilities to locate the device and wipe the data remotely.

Application privacy - Rogue applications can trick a user into granting them privileges that enable them to access various data sources on the device. These can include device identification data, call and message history, contents of the address book, geo-location data and browsing history. In addition, mobile operating systems log a user's keystrokes to help in auto-completion.

Malware - Malware can be disguised as a rogue application and steal confidential data using attack modules such as a keylogger.

The defenses against these threats are limited due to the restrictions imposed by the mobile operating system. Thus it is hard to detect malware and defend against it.

US 2005/0066186 A1 discloses a method and keyboard for protecting data generated by the keyboard when reading data from a keypad of the keyboard, encrypting the read data, and transmitting the encrypted data from the keyboard to a computer. US 2007/0182714 A1 discloses a method and system for securing keystrokes from being intercepted between a keyboard and a browser.

### SUMMARY OF THE INVENTION

The present invention focuses on securing user data, especially during data entry, rather than trying to detect malware.

The present invention secures user data throughout its lifecycle - (1) when entering data into the mobile device, (2) when storing the data in the mobile device, and (3) when transmitting data from the mobile device.

The invention in various embodiments includes one or more of the following components - (1) Custom On-Screen Keyboard, (2) Message Filter, (3) Custom Browser, (4) Pre-Filter, (5) Post-Filter, (6) Data Vault, (7) Biometric Store, (8) Certificate Store, (9) One Time Password Generator, and (10) Malware Analyzer.

Securing data entry is done by encrypting and passing the keystrokes directly to applications in an encrypted format. The application decrypts the keystroke before it is displayed. Thus, the present invention enables the user to enter sensitive information (passwords, credit card numbers, etc.) without the keystrokes being intercepted by keyloggers.

A data vault (i.e. database) stores the data securely in the mobile device. All data in the vault is stored in an encrypted form. The vault allows the data to be categorized. Also, the schema related to a particular entry can be dynamically changed. The vault also binds a particular entry to an application, either locally on the mobile device or to an application external to the device such that the entries related to an item can be automatically entered into the application.

Data is transmitted from the mobile device to an external application securely. The data is encrypted at the point of data entry and decrypted either at a local application on the mobile device, at the remote application or at a point midway between the local application and the remote application.

In accordance with a first aspect of the invention, the invention features a methodology for encrypting and passing the keystrokes to the application in an encrypted format.

In accordance with a second aspect of the invention, the invention features a methodology to store data in a vault in an encrypted form and launch an application with the data from the vault.

In accordance with a third aspect of the invention, the invention features a methodology to transmit data from the mobile device to an external application securely.

### BRIEF DESCRIPTION OF THE DRAWINGS

Preferred embodiments of the invention will be set forth with reference to the drawings, in which:

- Fig. 1: depicts the components of the preferred embodiments;
- Fig. 2: depicts the methodology to process keystrokes on a mobile device today;

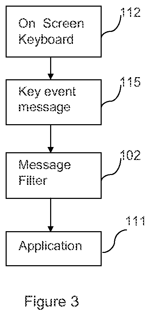

- Fig. 3: depicts one embodiment of the invention;
- Fig. 4: depicts another embodiment of the invention;
- Fig. 5: depicts yet another embodiment of the invention;
- Fig. 6: depicts the methodology of a data vault today; and
- Fig. 7: depicts one embodiment of the invention.

### DETAILED DESCRIPTION OF THE PREFERRED EMBODIMENTS

Exemplary embodiments of the invention are described herein in terms of processes. Efficient prototypes of such processes have been implemented as software on general-purpose hardware.

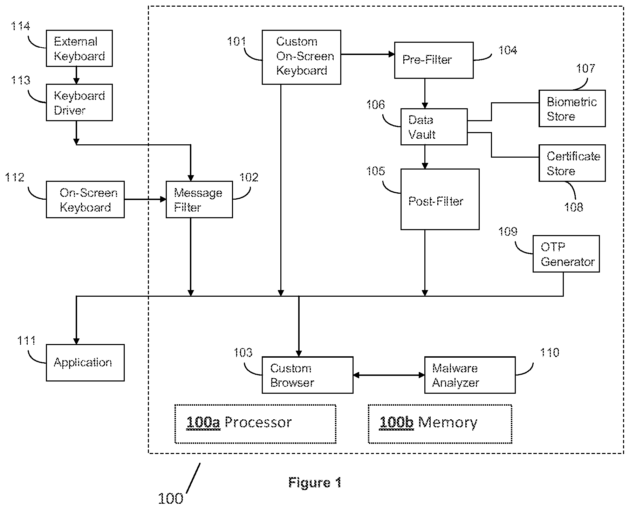

Fig. 1 depicts the components of the preferred embodiments of the invention - Custom On-Screen Keyboard 101, Message Filter 102, Custom Browser 103, Pre-Filter 104 Post-Filter 105, Data Vault 106, Biometric Store 107, Certificate Store 108, One Time Password Generator 109, and Malware Analyzer 110. The above and other components can be implemented in a mobile device 100 (smartphone, tablet, or the like) having a processor 100a and a persistent memory 100b storing code that, when executed on the processor 100a, implements the above components and any other desired functionality.

The Custom On-Screen Keyboard 101 generates a key event message (such as key up, key down and key press events). The message contains information (such as scan codes, virtual key codes and character codes) on the key pressed. The Custom On-Screen Keyboard 101 can be a modified version of the native On-Screen Keyboard 112 with or without extra buttons or input boxes for additional functionality. It can also be a non-native keyboard, for example a keyboard implemented in Javascript.

The Message Filter 102 gets the unencrypted key event and encrypts it.

The Custom Browser 103 enables secure access to web pages. It decrypts the keystrokes, has the capability to parse the web page to indicate encrypted input fields by means of a background color which can be selected by the user via a preference setting. The parsing also enables the detection of hidden iframes to check for click-jacking attacks. The Custom Browser 103 also communicates with a Malware Analyzer 110 to analyze the contents of the web page for any malware.

The Pre-Filter 104 processes the input data from the Custom On-Screen Keyboard 101, decrypts the key event messages, and re-encrypts the data in a format suitable for storing in the Data Vault 106.

The Post-Filter 105 decrypts the data coming out of the Data Vault 106 and launches the Custom Browser 103 or Application 111 with the appropriate data from the data vault.

The Data Vault 106 can be either a database or a directory suitable for storing user data. It has the capability to allow the user to modify the schema dynamically.

The Biometric Store 107 has the capability to allow the user to store any of their biometric information such as fingerprint, voiceprint, faceprint and irisprint. Alternatively, it may link to an existing biometric store either internally on the mobile device or externally.

The Certificate Store 108 has the capability to allow the user to store PKI certificates. Alternatively, it may link to an existing certificate store either internally on the mobile device or externally.

The One Time Password generator 109 has the capability to generate one time passwords which are either counter based or time based. The algorithm used to generate the one time passwords could be proprietary or based on a standard such as OATH and can support third-party OATH-compliant soft tokens, provisioned either manually or through a QR code. In addition, or instead, strong passwords can be created based on user-defined preferences and stored in a password vault, which securely stores an unlimited number of passwords with associated websites, for future use.

The Malware Analyzer 110 has the capability to analyze the contents received by the Custom Browser 103 to determine if they contain malware (i.e. viruses, spyware, trojans, botnets, rootkits, keyloggers, etc.) or the web page has links to malicious sites. Alternatively, it may link to an existing malware analysis service external to the device.

In accordance with a first aspect of the invention, the invention features a methodology for encrypting and passing the keystrokes to the application in an encrypted format.

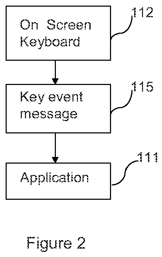

Fig. 2 depicts the methodology to process keystrokes on a mobile device today. When a key is pressed on the On Screen Keyboard 112, a key event, message (such as key up, key down and key press events) is created 115. The message contains information (such as scan codes, virtual key codes and character codes) on the key pressed. The message is retrieved by the Application 111 which displays the keystroke.

Fig, 3 depicts one embodiment of the invention. When a key is pressed on the On Screen Keyboard 112, a key event message is created 115. The message contains information on the key pressed. The contents of the message are encrypted by the Message Filter 102 that encrypts the contents of the message. The message is retrieved by the Application 111 which displays the keystroke after decrypting the message.

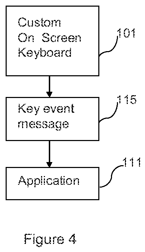

Fig. 4 depicts a comparative example. A Custom On Screen Keyboard 101 is used for data entry. When a key is pressed, the key is encrypted and then a key event message is generated 115. The message contains the key information in encrypted form. The message is retrieved by the Application 111 which displays the keystroke.

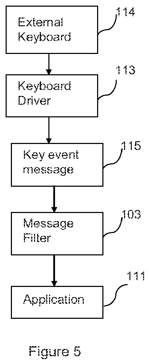

Fig. 5 depicts yet another embodiment of the invention. When a key is pressed on an External Keyboard 114 (for example a keyboard connected to the device externally), a key event message is created 115. The message contains information on the key pressed. The contents of the message are encrypted by the Message Filter 102 that encrypts the contents of the message. The message is retrieved by the Application 111 which displays the keystroke after decrypting the message.

In accordance with a second aspect of the invention, the invention features a methodology to store data in a vault in an encrypted form and launch an application with the data from the vault.

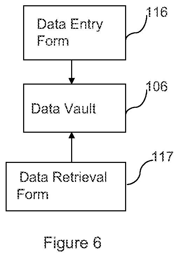

Fig. 6 depicts the methodology of a data vault today. A Data Entry form 116 is used to enter data into a Data Vault 106. A Data Retrieval form 117 is used to read the contents of the vault.

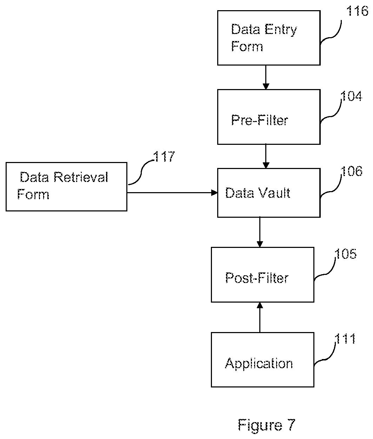

Fig. 7 depicts one embodiment of the invention. A Data Entry form 116 is used to enter data into a Data Vault 106. The data is intercepted, encrypted and processed by a Pre-Filter 104. A Data Retrieval form 117 is used to read the contents of the vault. The contents of the vault are intercepted by a Post-Filter 105 which launches an Application 111 based on the contents of the vault.

In accordance with a third aspect of the invention, the invention features a methodology to transmit data from the mobile device to an external application securely. Data is transmitted from the mobile device to an external application securely. The data is encrypted at the point of data entry and decrypted either at a local application on the mobile device, at the remote application or at a point midway between the local application and the remote application.

Although certain presently preferred embodiments of the present invention have been specifically described herein, it will be apparent to those skilled in the art to which the invention pertains that variations and modifications of the various embodiments shown and described herein may be made without departing from the scope of the invention. For instance, an embodiment can be modified to incorporate one or more features or another embodiment, or embodiments can be combined. Also, features disclosed separately can be used together, or vice versa. Accordingly, it is intended that the invention be limited only by the appended claims to the extent required by the applicable rules of law.

## Claims

1. A method for modifying key event messages, said method comprising:
(a) creating (115) key event messages corresponding to keystrokes generated by a keyboard (101), wherein said keyboard is selected from the group consisting of an onscreen keyboard implemented in software, a part of a mobile device implemented in hardware, a keyboard connected externally to a mobile device in a wired fashion, or a keyboard connected externally to a mobile device in a wireless fashion;
(b) encrypting the key event messages subsequent the creating in (a) using a message filter;
(c) sending the encrypted key event messages to an application (111) where the encrypted key event messages are decrypted before the contents of the key event messages are displayed,
comprising passing the encrypted key event messages to a message queue of an operating system.

2. A method as claimed in Claim 1, wherein the method further comprises:
(d) providing an interface to turn encryption of the key event messages on and off and turning the encryption on or off in accordance with an input into the interface; and
(e) indicating on the interface whether the encryption is turned on or off.

3. A method as claimed in Claim 1, wherein step (b) comprises using encryption keys selected from the group consisting of symmetric keys and asymmetric keys.

4. A method as claimed in Claim 2, wherein step (d) comprises monitoring a textbox that has focus, or, comprises providing a button in the application (111).

5. A method as claimed in Claim 2, wherein step (e) comprises providing a colored input field, or, comprises providing an icon that has a steady or flashing color.

6. A method as claimed in Claim 1, wherein information corresponding to the decrypted key event messages are displayed in text input fields launched by the application (111) when the text input fields are selected for input.

7. A method as claimed in Claim 1, wherein the key event messages comprise key up, key down, and key press events.

8. A method as claimed in Claim 1, wherein step (b) comprises passing a fake key event message to a message queue of an operating system which causes the application (111) to retrieve the encrypted key event messages.

9. A method as claimed in Claim 1, wherein said application (111) is a custom browser (103) which decrypts the encrypted key event messages.

10. A method as claimed in Claim 1, wherein said application is a browser (103) with a plug-in that decrypts the encrypted key event messages.

11. A system for modifying keystrokes of a keyboard of a mobile device, said system comprising:
a processor; and
a persistent storage medium storing code for controlling the processor for performing the method according to any of the preceding claims.

12. A system as claimed in Claim 11, wherein said system is configured such that said keyboard (101) is selected from the group consisting of an onscreen keyboard implemented in software, a part of the mobile device implemented in hardware, a keyboard connected externally to the mobile device in a wired fashion, a keyboard connected externally to the mobile device in a wireless fashion.

13. A method as claimed in Claim 1, wherein the application (111) resides on the mobile device.

## Patentansprüche

1. Verfahren zum Modifizieren von Tastenereignismeldungen, wobei das Verfahren Folgendes umfasst:
(a) Erstellen (115) von Tastenereignismeldungen, die Tastenanschlägen entsprechen, die durch eine Tastatur (101) erzeugt werden, wobei die Tastatur aus der Gruppe ausgewählt ist, die aus einer in Software implementierten Bildschirmtastatur, einem in Hardware implementierten Teil einer Mobilvorrichtung, einer kabelgebunden extern mit einer Mobilvorrichtung verbundenen Tastatur oder einer kabellosen extern mit einer Mobilvorrichtung verbundenen Tastatur besteht;
(b) Verschlüsseln der Tastenereignismeldungen im Anschluss an das Erstellen in (a) unter Verwendung eines Meldungsfilters;
(c) Senden der verschlüsselten Tastenereignismeldungen an eine Anwendung (111), wo die verschlüsselten Tastenereignismeldungen entschlüsselt werden, bevor die Inhalte der Tastenereignismeldungen angezeigt werden, das ein Weitergeben der verschlüsselten Tastenereignismeldungen an eine Meldungswarteschlange eines Betriebssystems umfasst.

2. Verfahren nach Anspruch 1, wobei das Verfahren ferner Folgendes umfasst:
(d) Bereitstellen einer Schnittstelle, um die Verschlüsselung der Tastenereignismeldungen ein- und auszuschalten und die Verschlüsselung gemäß einer Eingabe in die Schnittstelle ein- oder auszuschalten; und
(e) Angeben auf der Schnittstelle, ob die Verschlüsselung ein- oder ausgeschaltet ist.

3. Verfahren nach Anspruch 1, wobei Schritt (b) ein Verwenden von Verschlüsselungstasten umfasst, die aus der Gruppe ausgewählt sind, die aus symmetrischen Tasten und asymmetrischen Tasten besteht.

4. Verfahren nach Anspruch 2, wobei Schritt (d) ein Überwachen eines Textfeldes, das einen Fokus aufweist, umfasst, oder das Bereitstellen einer Schaltfläche in der Anwendung (111) umfasst.

5. Verfahren nach Anspruch 2, wobei Schritt (e) das Bereitstellen eines farbigen Eingabefeldes umfasst, oder das Bereitstellen eines Symbols, das eine gleichmäßige oder eine blinkende Farbe aufweist, umfasst.

6. Verfahren nach Anspruch 1, wobei Informationen, die den entschlüsselten Tastenereignismeldungen entsprechen, in Texteingabefeldern angezeigt werden, die durch die Anwendung (111) gestartet werden, wenn die Texteingabefelder für die Eingabe ausgewählt werden.

7. Verfahren nach Anspruch 1, wobei die Tastenereignismeldungen die Ereignisse "Taste nach oben", "Taste nach unten" und "Taste gedrückt" umfassen.

8. Verfahren nach Anspruch 1, wobei Schritt (b) das Weitergeben einer gefälschten Tastenereignismeldung an eine Meldungswarteschlange eines Betriebssystems umfasst, die die Anwendung (111) veranlasst, die verschlüsselten Tastenereignismeldungen abzurufen.

9. Verfahren nach Anspruch 1, wobei die Anwendung (111) ein benutzerdefinierter Browser (103) ist, der die verschlüsselten Tastenereignismeldungen entschlüsselt.

10. Verfahren nach Anspruch 1, wobei die Anwendung ein Browser (103) mit einem Plug-in ist, das die verschlüsselten Tastenereignismeldungen entschlüsselt.

11. System zum Modifizieren von Tastenanschlägen einer Tastatur einer Mobilvorrichtung, wobei das System Folgendes umfasst:
einen Prozessor; und
ein beständiges Speichermedium, das einen Code zum Steuern des Prozessors zum Ausführen des Verfahrens nach einem der vorhergehenden Ansprüche speichert.

12. System nach Anspruch 11, wobei das System derart konfiguriert ist, dass die Tastatur (101) aus der Gruppe ausgewählt ist, die aus einer in Software implementierten Bildschirmtastatur, einem in Hardware implementierten Teil einer Mobilvorrichtung, einer kabelgebunden extern mit der Mobilvorrichtung verbundenen Tastatur und einer kabellosen extern mit der Mobilvorrichtung verbundenen Tastatur besteht.

13. Verfahren nach Anspruch 1, wobei sich die Anwendung (111) auf der Mobilvorrichtung befindet.

## Revendications

1. Procédé de modification de messages d'événement de touche, ledit procédé comprenant :
(a) la création (115) de messages d'événement de touche correspondant à des frappes générées par un clavier (101), ledit clavier étant sélectionné dans le groupe constitué par un clavier à l'écran mis en application dans un logiciel, une partie d'un dispositif mobile implantée dans un matériel, un clavier connecté en externe à un dispositif mobile de manière filaire, ou un clavier connecté en externe à un dispositif mobile de manière non-filaire ;
(b) le chiffrage des messages d'événement de touche après leur création lors de (a) à l'aide d'un filtre de message ;
(c) l'envoi des messages d'événement de touche chiffrés à une application (111) où les messages d'événement de touche chiffrés sont déchiffrés avant l'affichage du contenu des messages d'événement de touche,
comprenant le passage des messages d'événement de touche chiffrés à une file d'attente de messages d'un système d'exploitation.

2. Procédé selon la revendication 1, dans lequel le procédé comprend en outre :
(d) le fait de fournir une interface pour activer et désactiver le chiffrage des messages d'événement de touche et activer ou désactiver le chiffrage en fonction d'une entrée dans l'interface ; et
(e) le fait d'indiquer sur l'interface si le chiffrage est activé ou désactivé.

3. Procédé selon la revendication 1, dans lequel l'étape (b) comprend l'utilisation de clés de chiffrage sélectionnées dans le groupe constitué par des clés secrètes et des clés publiques.

4. Procédé selon la revendication 2, dans lequel l'étape (d) comprend la surveillance d'une zone de texte qui présente une cible de saisie, ou, comprend le fait de fournir un bouton dans l'application (111).

5. Procédé selon la revendication 2, dans lequel l'étape (e) comprend le fait de fournir une zone d'entrée colorée, ou comprend le fait de fournir une icône qui présente une couleur fixe ou clignotante.

6. Procédé selon la revendication 1, dans lequel les informations correspondant aux messages d'événement de touche déchiffrés sont affichées dans des zones d'entrée de texte lancées par l'application (111) lorsque les zones d'entrée de texte sont sélectionnées en vue d'une entrée.

7. Procédé selon la revendication 1, dans lequel les messages d'événement de touche comprennent des événements de touche relâchée, de touche enfoncée et d'appui sur une touche.

8. Procédé selon la revendication 1, dans lequel l'étape (b) comprend le passage d'un message d'événement de touche falsifié à une file d'attente de messages d'un système d'exploitation qui amène l'application (111) à récupérer les messages d'événement de touche chiffrés.

9. Procédé selon la revendication 1, dans lequel ladite application (111) est un navigateur personnalisé (103) qui déchiffre les messages d'événement de touche chiffrés.

10. Procédé selon la revendication 1, dans lequel ladite application est un navigateur (103) doté d'un module d'extension qui déchiffre les messages d'événement de touche chiffrés.

11. Système de modification de frappes d'un clavier d'un dispositif mobile, ledit système comprenant :
un processeur ; et
un support de stockage persistant stockant du code destiné à commander le processeur pour exécuter le procédé selon l'une quelconque des revendications précédentes.

12. Système selon la revendication 11, dans lequel ledit système est configuré de telle sorte que ledit clavier (101) est sélectionné dans le groupe constitué par un clavier virtuel mis en application dans un logiciel, une partie du dispositif mobile implantée dans un matériel, un clavier connecté en externe au dispositif mobile de manière filaire, un clavier connecté en externe au dispositif mobile de manière non-filaire.

13. Procédé selon la revendication 1, dans lequel l'application (111) réside sur le dispositif mobile.
